# EUROPÄISCHE PATENTSCHRIFT

(11) **EP 3 529 414 B1**
(45) Veröffentlichungstag und Bekanntmachung des Hinweises auf die Patenterteilung: **17.06.2020**
(21) Anmeldenummer: 17771433.4
(22) Anmeldetag: 21.09.2017
(51) Int. Cl.: D21B 1/32, D21B 1/34, D21D 5/06

(54) **ROTIERENDE TROMMEL ZUR BEHANDLUNG VON FASERSTOFF**
ROTATING DRUM FOR TREATING FIBROUS MATERIAL
TAMBOUR ROTATIF POUR LE TRAITEMENT DE MATIÈRE FIBREUSE

(30) Priorität: 24.10.2016 DE 102016220819
(43) Veröffentlichungstag der Anmeldung: 28.08.2019
(73) Patentinhaber: Voith Patent GmbH, 89522 Heidenheim (DE)
(72) Erfinder: MÜLLER, Wolfgang, 88250 Weingarten (DE)
(74) Vertreter: Voith Patent GmbH - Patentabteilung
(86) Internationale Anmeldenummer: PCT/EP2017/073844
(87) Internationale Veröffentlichungsnummer: WO 2018/077540

(56) Entgegenhaltungen:
- EP-A1- 0 194 332
- DE-U1-202012 013 187
- US-A- 1 451 522

## Beschreibung

Die Erfindung betrifft eine rotierende Trommel zur Behandlung von Faserstoff, deren Rotationsachse höchstens 30° zur Horizontalen geneigt ist, mit einer Sortierzone, in die mit Wasser vermischter Faserstoff zugeführt wird und in der die Trommel perforiert ist, wobei eine Feinfraktion die Perforation durchströmt und eine Grobfraktion von dieser abgewiesen wird und der Perforation eine außerhalb der Trommel angeordnete Reinigungsvorrichtung zugeordnet ist, welche von wenigstens einem Spritzrohr mit mehreren Düsenöffnungen gebildet wird.

Mit Hilfe einer solchen, beispielsweise aus der EP 0 194 332 A bekannten Vorrichtung soll in vielen Fällen verschmutztes Altpapier mit Wasser vermischt, zerkleinert und sortiert werden. Hierzu wird in einer Auflösezone des meist liegenden Zylinders/Trommel das mit Wasser versetzte Altpapier durch Anheben, Rutschen und Fallen, bzw. Relativbewegungen der Stoffanteile zueinander, zerkleinert.
In der Sortierzone soll dann der gelöste Faserstoff von Unrat getrennt werden. Während die Feinfraktion die Perforation, d.h. die Sortieröffnungen passiert, wird die Grobfraktion mit dem Unrat abgewiesen und aus der Trommel geführt.
Die Auflösung kann auch in separaten Trommeln oder anderen Vorrichtungen realisiert werden.
Das Freihalten der Perforation erfolgt hierbei in der Regel mit Hilfe von Sprüheinrichtungen mit feinem Flachstrahl. Um einem Verstopfen der Düsen dieser Sprüheinrichtungen entgegenzuwirken, sind allerdings ein hoher Wasserdruck von ca. 10 bar sowie Reinigungsbürsten erforderlich.

Die Aufgabe der Erfindung ist es daher den Aufwand für das Freihalten der Perforation zu vermindern.

Erfindungsgemäß wurde die Aufgabe dadurch gelöst, dass die Düsenöffnungen jeweils einen Wasserstrahl auf einen Reflektor richten, welcher den Wasserstrahl zur perforierten Außenwand der Trommel reflektiert.

Die Reflexion des Wasserstrahls am Reflektor bewirkt eine Auffächerung des Wasserstrahls, was beim Spritzrohr größere und damit weniger verstopfungsgefährdete Düsenöffnungen erlaubt.
Daher können die Düsenöffnungen in besonders einfacher Ausführung von jeweils einem Loch mit einem Durchmesser zwischen 5 und 9 mm gebildet werden.

Die verminderte Verstopfungsgefahr erlaubt es, das Spritzrohr mit einem Wasserdruck zwischen 1,5 und 6 bar zu versorgen. Auch die Verwendung von Prozesswasser mit einem Faseranteil von bis zu 0,2 % ist hierdurch für die Versorgung des Sprührohrs möglich.

Um die Perforation der Trommel gleichmäßig und umfassend von außen zu besprühen, sollte das Spritzrohr parallel zur Rotationsachse der Trommel und vorzugsweise über den gesamten perforierten Bereich der Trommel verlaufen.

Wenn die Düsenöffnungen in wenigstens einer Reihe entlang des Spritzrohres angeordnet werden, so kann mittels der Reflexion und der damit verbundenen Auffächerung der jeweiligen Wasserstrahlen in Summe etwa ein Flachstrahl nachgebildet werden.
Im Interesse eines weitestgehend durchgängigen Flachstrahls sollte der Abstand zwischen den Düsenöffnungen zwischen 100 und 400 mm, vorzugsweise zwischen 150 und 300 mm liegen.

Zur Vereinfachung der Konstruktion ist es hierbei von Vorteil, wenn wenigstens ein Reflektor am Spritzrohr befestigt und/oder den Düsenöffnungen ein gemeinsamer Reflektor zugeordnet ist.

Ein gemeinsamer Reflektor wiederum lässt sich insbesondere von einem, entlang des Spritzrohres verlaufenden Blechstreifen bilden, welcher vorzugsweise am Spritzrohr befestigt wird.

Für eine optimale Reinigungswirkung empfiehlt es sich, die Reinigungsvorrichtung in der oberen Hälfte der Trommel anzuordnen und den vom Reflektor abgelenkten Wasserstrahl möglichst von oben auf die Trommel zu richten.

Des Weiteren ist es vorteilhaft, wenn unterhalb der Sortierzone ein Auffangbehälter zur Aufnahme der Feinfraktion und des aufgesprühten, an der Trommel außen ablaufenden Wassers vorhanden ist.

Dies macht sich insbesondere auch deshalb notwendig, weil zur Unterstützung der Sortierung sowie zur Senkung der Stoffdichte des Faserstoffs meist zusätzlich Wasser in die Trommel eingebracht wird.

Nachfolgend soll die Erfindung an einem Ausführungsbeispiel näher erläutert werden. In der beigefügten Zeichnung zeigt:
Figur 1: einen schematischen Querschnitt durch eine rotierende Trommel 4;
Figur 2: einen vergrößerten Teilquerschnitt durch die Sortierzone 3 der Trommel 4 mit Spritzrohr 6 und
Figur 3: eine Teildraufsicht des Außenmantels der Trommel 4 mit Spritzrohr 6.

Die zylindrische Trommel 4 wird über einen Antrieb in Rotation versetzt, wobei die Rotationsachse 2 geringfügig geneigt zur Waagerechten verläuft. Je nachdem ob diese Neigung nach oben oder unten realisiert wird, kann der Transport in Richtung Auslass behindert oder unterstützt werden.

Zur Auflösung wird das Altpapier intensiv mit Wasser vermischt, wobei es infolge der Hebe-, Rutsch- und Fallbewegungen zu einer Zerkleinerung des aufgeweichten Papiermaterials in der Trommel 4 kommt.
Die Zuführung des Faserstoffs 1 erfolgt an einer Stirnseite der Trommel 4.
Um die Bewegung des Faserstoffs 1 in der Trommel 4, insbesondere zum Auslass an der gegenüberliegenden Stirnseite der Trommel 4 zu unterstützen, besitzt diese 4 auf der Innenseite Hebeleisten und Förderelemente o.ä. Einbauten. Solche Einbauten sind in vielfältiger Form bekannt und werden auf den jeweiligen Verwendungszweck abgestimmt.

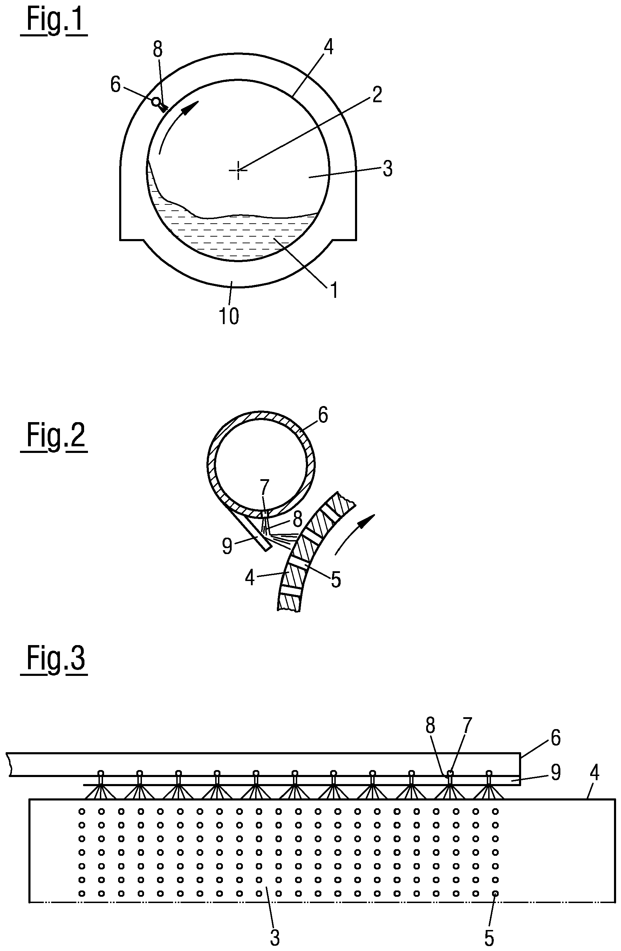

Die Figuren 1 bis 3 zeigen eine Trommel 4 mit einer Sortierzone 3 ohne eine mitunter zusätzlich vorhandene, vorangehende Auflösezone.
Im Unterschied zur Auflösezone hat die Trommel 4 im Bereich der Sortierzone 3 eine Perforation 5, durch die die Feinfraktion nach außen gelangen kann.
Die meist größeren Störstoffe werden von dieser Perforation 5 abgewiesen und in Form einer Grobfraktion bzw. des Rejekts über den Auslass an der Stirnseite der Trommel 4 abgeführt.

Unterhalb der Sortierzone 3 befindet sich ein Auffangbehälter 10 zur Aufnahme der Feinfraktion. Oberhalb der Trommel 4 ist im Bereich der Sortierzone 3 eine Reinigungsvorrichtung mit einem Spritzrohr 6 angeordnet, welche einen Wasserstrahl 8 auf die Perforation 5 richtet. Dieser reinigt die Perforation 5 und führt außerdem zu einer weiteren Verdünnung des Faserstoffs 1 innerhalb der Sortierzone 3.
Allerdings gelangt hierbei nur etwa 50 bis 60% des aufgesprühten Wassers in die Sortierzone 3. Der andere Teil des Wassers läuft außen an der Trommel 4 entlang in den Auffangbehälter 10.

Um die Sortierzone 3 möglichst umfassend nutzen zu können, wird der Faserstoff 1 zusätzlich mit Wasser verdünnt, so dass die Feinfraktion problemlos die Perforation 5 passieren kann.

Das Spritzrohr 6 der Reinigungsvorrichtung erstreckt sich gemäß Figur 2 außerhalb der Trommel 4 parallel zur deren Rotationsachse 2 über die gesamte Länge der Sortierzone 3. Auf diese Weise kann einem Verstopfen der Perforation 5 der Sortierzone 3 wirksam begegnet werden.
Hierzu besitzt das Spritzrohr 6 mehrere, in einer Reihe parallel zur Rotationsachse 2 und entlang des Spritzrohres 6 angeordnete Düsenöffnungen 7. Diese Düsenöffnungen 7 richten, wie in Figur 2 und 3 zu erkennen, jeweils einen Wasserstrahl 8 auf einen gemeinsamen Reflektor 9, welcher die Wasserstrahlen 8 zur perforierten Außenwand der Trommel 4 reflektiert.
Infolge der Reflexion kommt es zu einer Auffächerung der Wasserstrahlen 8 und damit zur Bildung eines, auf die Perforation 5 gerichteten Flachstrahls.

Dieser Flachstrahl gewährleistet eine effiziente Reinigung der Perforation 5 auch ohne spezielle Düsenformen, so dass im Spritzrohr 6 ein Wasserdruck zwischen 1,5 und 6 bar ausreicht.
Dabei können die Düsenöffnungen 7 von jeweils einem Loch mit einem Durchmesser zwischen 5 und 9 mm gebildet werden. Diese relativ große Öffnung wiederum erlaubt den Einsatz von Prozess-Wasser mit einem Faseranteil von bis zu 0,2 % als Reinigungsfluid des Spritzrohres 6.

Um den Flachstrahl möglichst durchgehend auszubilden, liegt der Abstand zwischen den benachbarten Düsenöffnungen 7 zwischen 150 und 300 mm.

Im Interesse einer einfachen Konstruktion wird der Reflektor 9 von einem, entlang des Spritzrohres 6 verlaufenden und am Spritzrohr 6 befestigten Blechstreifen gebildet.

## Patentansprüche

1. RotierendeTrommel (4) zur Behandlung von Faserstoff (1), deren Rotationsachse (2) höchstens 30° zur Horizontalen geneigt ist, mit einer Sortierzone (3), in die mit Wasser vermischter Faserstoff (1) zugeführt wird und in der die Trommel (4) perforiert ist, wobei eine Feinfraktion die Perforation (5) durchströmt und eine Grobfraktion von dieser abgewiesen wird und der Perforation (5) eine außerhalb der Trommel (4) angeordnete Reinigungsvorrichtung zugeordnet ist, welche von wenigstens einem Spritzrohr (6) mit mehreren Düsenöffnungen (7) gebildet wird, **dadurch gekennzeichnet, dass** die Düsenöffnungen (7) jeweils einen Wasserstrahl (8) auf einen Reflektor (9) richten, welcher den Wasserstrahl (8) zur perforierten Außenwand der Trommel (4) reflektiert.

2. Rotierende Trommel (4) nach Anspruch 1, **dadurch gekennzeichnet, dass** das Spritzrohr (6) parallel zur Rotationsachse (2) der Trommel (4) und vorzugsweise über den gesamten perforierten Bereich der Trommel (4) verläuft.

3. Rotierende Trommel (4) nach Anspruch 1 oder 2, **dadurch gekennzeichnet, dass** die Düsenöffnungen (7) in einer Reihe entlang des Spritzrohres (6) angeordnet sind.

4. Rotierende Trommel (4) nach einem der vorhergehenden Ansprüche, **dadurch gekennzeichnet, dass** wenigstens ein Reflektor (9) am Spritzrohr (6) befestigt ist.

5. Rotierende Trommel (4) nach einem der vorhergehenden Ansprüche, **dadurch gekennzeichnet, dass** den Düsenöffnungen (7) ein gemeinsamer Reflektor (9) zugeordnet ist.

6. Rotierende Trommel (4) nach Anspruch 5, **dadurch gekennzeichnet, dass** der gemeinsame Reflektor (9) von einem, entlang des Spritzrohres (6) verlaufenden Blechstreifen gebildet wird.

7. Rotierende Trommel (4) nach einem der vorhergehenden Ansprüche, **dadurch gekennzeichnet, dass** die Düsenöffnungen (7) von jeweils einem Loch mit einem Durchmesser zwischen 5 und 9 mm gebildet werden.

8. Rotierende Trommel (4) nach einem der vorhergehenden Ansprüche, **dadurch gekennzeichnet, dass** der Abstand zwischen den Düsenöffnungen (7) zwischen 100 und 400 mm, vorzugsweise zwischen 150 und 300 mm liegt.

9. Rotierende Trommel (4) nach einem der vorhergehenden Ansprüche, **dadurch gekennzeichnet, dass** das Spritzrohr (6) mit einem Wasserdruck zwischen 1,5 und 6 bar versorgt wird.

10. Rotierende Trommel (4) nach einem der vorhergehenden Ansprüche, **dadurch gekennzeichnet, dass** das Spritzrohr (6) mit Wasser versorgt wird, welches eine Faseranteil von bis zu 0,2 % aufweist.

11. Rotierende Trommel (4) nach einem der vorhergehenden Ansprüche, **dadurch gekennzeichnet, dass** die Reinigungsvorrichtung in der oberen Hälfte der Trommel (4) angeordnet ist.

12. Rotierende Trommel (4) nach einem der vorhergehenden Ansprüche, **dadurch gekennzeichnet, dass** unterhalb der Sortierzone (3) ein Auffangbehälter (10) zur Aufnahme der Feinfraktion und des aufgesprühten Wassers vorhanden ist.

## Claims

1. Rotating drum (4) for treating fibrous material (1), the axis of rotation (2) of said drum being inclined by at most 30° with respect to the horizontal, having a sorting zone (3) into which fibrous material (1) mixed with water is fed and in which the drum (4) is perforated, wherein a fine fraction flows through the perforation (5) and a coarse fraction is rejected by said perforation, and a cleaning apparatus which is arranged outside of the drum (4) and which is formed by at least one spray tube (6) having a plurality of nozzle openings (7) is assigned to the perforation (5), **characterized in that** the nozzle openings (7) each direct a water jet (8) onto a reflector (9) which reflects the water jet (8) towards the perforated outer wall of the drum (4).

2. Rotating drum (4) according to Claim 1, **characterized in that** the spray tube (6) runs parallel to the axis of rotation (2) of the drum (4) and preferably over the entire perforated region of the drum (4).

3. Rotating drum (4) according to Claim 1 or 2, **characterized in that** the nozzle openings (7) are arranged in a row along the spray tube (6).

4. Rotating drum (4) according to one of the preceding claims, **characterized in that** at least one reflector (9) is fastened to the spray tube (6).

5. Rotating drum (4) according to one of the preceding claims, **characterized in that** a common reflector (9) is assigned to the nozzle openings (7).

6. Rotating drum (4) according to Claim 5, **characterized in that** the common reflector (9) is formed by a sheet metal strip which runs along the spray tube (6).

7. Rotating drum (4) according to one of the preceding claims, **characterized in that** the nozzle openings (7) are each formed by a hole having a diameter between 5 and 9 mm.

8. Rotating drum (4) according to one of the preceding claims, **characterized in that** the spacing between the nozzle openings (7) lies between 100 and 400 mm, preferably between 150 and 300 mm.

9. Rotating drum (4) according to one of the preceding claims, **characterized in that** the spray tube (6) is supplied with a water pressure between 1.5 and 6 bar.

10. Rotating drum (4) according to one of the preceding claims, **characterized in that** the spray tube (6) is supplied with water which has a fibre content of up to 0.2%.

11. Rotating drum (4) according to one of the preceding claims, **characterized in that** the cleaning apparatus is arranged in the upper half of the drum (4).

12. Rotating drum (4) according to one of the preceding claims, **characterized in that** a collection container (10) for collecting the fine fraction and the sprayed-on water is present below the sorting zone (3) .

## Revendications

1. Tambour rotatif (4) pour le traitement de matière fibreuse (1), dont l'axe de rotation (2) est incliné d'au plus 30° par rapport à l'horizontale, comprenant une zone de tri (3), dans laquelle une matière fibreuse (1) mélangée avec de l'eau est introduite et dans laquelle le tambour (4) est perforé, une fraction fine traversant la perforation (5) et une fraction grossière étant refusée par celle-ci, et un dispositif de lavage agencé à l'extérieur du tambour (4) étant associé à la perforation (5), qui est formé par au moins un tube de pulvérisation (6) pourvu de plusieurs ouvertures de buse (7), **caractérisé en ce que** les ouvertures de buse (7) dirigent chacune un jet d'eau (8) sur un réflecteur (9), qui réfléchit le jet d'eau (8) vers la paroi extérieure perforée du tambour (4).

2. Tambour rotatif (4) selon la revendication 1, **caractérisé en ce que** le tube de pulvérisation (6) s'étend en parallèle à l'axe de rotation (2) du tambour (4) et de préférence sur l'ensemble de la zone perforée du tambour (4).

3. Tambour rotatif (4) selon la revendication 1 ou 2, **caractérisé en ce que** les ouvertures de buse (7) sont agencées en une série le long du tube de pulvérisation (6) .

4. Tambour rotatif (4) selon l'une quelconque des revendications précédentes, **caractérisé en ce qu'**au moins un réflecteur (9) est fixé sur le tube de pulvérisation (6).

5. Tambour rotatif (4) selon l'une quelconque des revendications précédentes, **caractérisé en ce qu'**un réflecteur commun (9) est associé aux ouvertures de buse (7).

6. Tambour rotatif (4) selon la revendication 5, **caractérisé en ce que** le réflecteur commun (9) est formé par une bande de tôle qui s'étend le long du tube de pulvérisation (6).

7. Tambour rotatif (4) selon l'une quelconque des revendications précédentes, **caractérisé en ce que** les ouvertures de buse (7) sont chacune formées par un orifice ayant un diamètre compris entre 5 et 9 mm.

8. Tambour rotatif (4) selon l'une quelconque des revendications précédentes, **caractérisé en ce que** l'écart entre les ouvertures de buse (7) est compris entre 100 et 400 mm, de préférence entre 150 et 300 mm.

9. Tambour rotatif (4) selon l'une quelconque des revendications précédentes, **caractérisé en ce que** le tube de pulvérisation (6) est alimenté avec une pression d'eau comprise entre 1,5 et 6 bar.

10. Tambour rotatif (4) selon l'une quelconque des revendications précédentes, **caractérisé en ce que** le tube de pulvérisation (6) est alimenté avec de l'eau qui présente une proportion de fibres de jusqu'à 0,2 %.

11. Tambour rotatif (4) selon l'une quelconque des revendications précédentes, **caractérisé en ce que** le dispositif de lavage est agencé dans la moitié supérieure du tambour (4).

12. Tambour rotatif (4) selon l'une quelconque des revendications précédentes, **caractérisé en ce qu'**un contenant de collecte (10) pour la réception de la fraction fine et de l'eau pulvérisée est présent en dessous de la zone de tri (3).
